# FASCICULE DE BREVET EUROPEEN

(11) **EP 3 035 132 B1**
(45) Date de publication et mention de la délivrance du brevet: **19.07.2017**
(21) Numéro de dépôt: 14198041.7
(22) Date de dépôt: 15.12.2014
(51) Int. Cl.: G04G 17/00, G04G 17/08, G04G 21/02

(54) **Elément d'habillage avec capteur de pression**
Ausstattungsungselement mit Drucksensor
External timepiece element with pressure sensor

(43) Date de publication de la demande: 22.06.2016
(73) Titulaire: The Swatch Group Research and Development Ltd., 2074 Marin (CH)
(72) Inventeur: François, Nicolas, 2000 Neuchâtel (CH); Bourban, Stewes, 1589 Chabrey (CH); Muller, Juliette, 2520 La Neuveville (CH)
(74) Mandataire: Goulette, Ludivine

(56) Documents cités:
- EP-A1- 1 672 443
- WO-A1-2008/037076
- WO-A1-2011/050128
- US-A1- 2013 340 188
- ARNO SEEBOTH ET AL: "Piezochromic Polymer Materials Displaying Pressure Changes in Bar-Ranges", AMERICAN JOURNAL OF MATERIALS SCIENCE, vol. 1, no. 2, 31 août 2012 (2012-08-31), pages 139-142, XP055200213, ISSN: 2162-9382, DOI: 10.5923/j.materials.20110102.23

## Description

La présente invention est relative à un élément d'habillage d'une pièce d'horlogerie comprenant une armature réalisé en un premier matériau, ledit élément d'habillage comprenant en outre au moins un capteur de pression.

### ARRIERE PLAN TECHNOLOGIQUE

Il est connu des objets portables tels que des montres équipées de capteur de pression permettant la détection de l'altitude. Ces capteurs de pression peuvent se présenter sous la forme de capteur piézo-électrique utilisé pour transformer une contrainte, la pression de l'air ou de l'eau, en un signal électrique qui sera analysé par un microcontrôleur.

Un inconvénient de ces capteurs piézo-électriques est qu'ils ont un temps de latence pour l'affichage de la pression et donc de l'altitude. Il nécessite également un système micro-électronique et donc une source d'énergie pour fonctionner.

Une autre possibilité connue consiste en une montre de plongée qui laisse pénétrer l'eau dans une cannelure ou conduit à l'intérieur même de la glace saphir, ce qui permet de mesurer la profondeur atteinte. Ce procédé s'appuie sur la loi physique dite de Boyle-Mariotte. Si la pression augmente, le volume de gaz décroît. Plus l'eau entre dans la jauge, plus l'air à l'intérieur est comprimé. Le point de contact entre l'eau et l'air indique la profondeur sur une graduation du pourtour du cadran.

Un inconvénient de cette solution est qu'elle présente le risque de voir des gouttes d'eau rester coincées dans le conduit créant une bulle d'air faussant le mécanisme et donc rendant la lecture de l'information peu fiable.

Une autre possibilité consiste à utiliser un capillaire fermé rempli d'un fluide se trouvant dans un réservoir relié au capillaire. Ce circuit fermé est inséré entre deux plaques de sorte qu'en fonction de la pression, le réservoir se comprime faisant se déplacer le fluide dans le capillaire, ce qui permet de déterminer la profondeur ou l'altitude.

Néanmoins, cette solution complexe à mettre en oeuvre requiert un fluide avec des propriétés physiques limitant les possibilités décoratives.

Le document EP 1 672 443 A2 décrit un élément d'habillage d'une pièce d'horlogerie, notamment un fond de boîtier, comportant un capteur de pression. De façon équivalente, US 2005/0132815 A1 décrit une carrure de montre comportant un capteur de pression.

On connait également le document WO 2008/037076 qui décrit un textile dont les fibres comprennent un pigment photochromique. Ce document mentionne la possibilité d'utiliser ces fibres pour la réalisation d'un bracelet de montre.

### RESUME DE L'INVENTION

L'invention concerne un élément d'habillage qui pallie les inconvénients susmentionnés de l'art antérieur en proposant un objet portable capable de fournir une indication d'altitude de manière lisible et fiable.

A cet effet, l'invention a pour but de fournir un élément d'habillage d'une pièce d'horlogerie comprenant une armature réalisée en un premier matériau, ledit élément d'habillage comprenant en outre au moins un capteur de pression, caractérisé en ce que ledit capteur de pression est formé d'au moins une pastille, ladite pastille étant composée d'un liant et d'un pigment piézochromique, ledit pigment piézochromique étant sélectionné pour réagir à une pression spécifique de sorte que ledit pigment passe d'une première couleur à une seconde couleur lorsque ladite pression spécifique est atteinte.

Dans un premier mode de réalisation avantageux, ledit capteur d'altitude est formé d'une pluralité de pastilles, chaque pastille réagissant à une pression spécifique qui lui est propre.

Dans un second mode de réalisation avantageux, lesdites pastilles ont toutes la même première couleur.

Dans un troisième mode de réalisation avantageux, lesdites pastilles ont toutes la même seconde couleur.

Dans un quatrième mode de réalisation avantageux, lesdites pastilles sont conçues de sorte que leur seconde couleur permet un dégradé lorsqu'elles sont toutes passées de la première couleur à la seconde couleur.

Dans un cinquième mode de réalisation avantageux, ledit capteur d'altitude permet la mesure d'une altitude positive par rapport au niveau de la mer.

Dans un sixième mode de réalisation avantageux, ledit capteur d'altitude permet la mesure d'une altitude négative par rapport au niveau de la mer.

Dans un autre mode de réalisation avantageux, ledit capteur d'altitude permet la mesure d'une profondeur sous l'eau.

Dans un autre mode de réalisation avantageux, la pastille se présente sous la forme d'une encre ou peinture ou laque déposée sur l'armature, ladite armature étant creuse.

Dans un autre mode de réalisation avantageux, la pastille se présente sous la forme d'un insert formé d'un corps creux étanche à l'eau et à l'air, ledit corps creux étant revêtu par ledit pigment piézochromique.

Dans un autre mode de réalisation avantageux, la pastille se présente sous la forme d'un insert formé d'un corps creux étanche à l'eau et à l'air, ledit pigment piézochromique étant dispersé dans le matériau formant ledit corps.

Dans un autre mode de réalisation avantageux, l'armature comprend au moins une creusure dans laquelle la pastille est agencée.

Dans un autre mode de réalisation avantageux, l'armature est une lunette.

Dans un autre mode de réalisation avantageux, l'armature est une glace.

Dans un autre mode de réalisation avantageux, l'armature est une carrure de boite de montre.

Dans un autre mode de réalisation avantageux, l'armature est un bracelet.

Dans un autre mode de réalisation avantageux, le bracelet comprend deux brins de bracelet en matériaux plastiques, ledit capteur d'altitude étant agencé sur au moins un des deux brins.

Dans un autre mode de réalisation avantageux, le bracelet comprend une pluralité de maillons articulés entre eux, ledit capteur d'altitude étant agencé sur au moins un maillon.

Dans un autre mode de réalisation avantageux, ledit bracelet est fermé par un fermoir à boucle déployante, ledit capteur d'altitude étant agencé sur ledit fermoir.

Dans un autre mode de réalisation avantageux, l'armature est une couronne.

Dans un autre mode de réalisation avantageux, ledit pigment piezochromique est couplé à un pigment luminescent pour émettre une couleur plus intense.

### BREVE DESCRIPTION DES FIGURES

Les avantages d'un tel élément d'habillage apparaîtront clairement à la lecture de la description qui va suivre et à l'examen du dessin qui l'illustre à titre d'exemple et dans lequel :
- les figures 1 et 2 représentent de manière schématique une pièce d'horlogerie selon la présente invention ;
- les figures 3 et 4 représentent de manière schématique une lunette formant l'élément d'habillage selon la présente invention
- les figures 5 et 6 représentent de manière schématique une glace formant l'élément d'habillage selon la présente invention
- la figure 7 représente de manière schématique une carrure formant l'élément d'habillage selon la présente invention
- la figure 8 représente de manière schématique un brin de bracelet formant l'élément d'habillage selon la présente invention
- la figure 9 représente de manière schématique des maillons de brin de bracelet formant l'élément d'habillage selon la présente invention
- les figures 10 à 12 représentent de manière schématique un fermoir de bracelet formant l'élément d'habillage selon la présente invention

### DESCRIPTION DETAILLEE

La présente invention concerne un élément d'habillage 1 d'une pièce d'horlogerie ou montre 100.

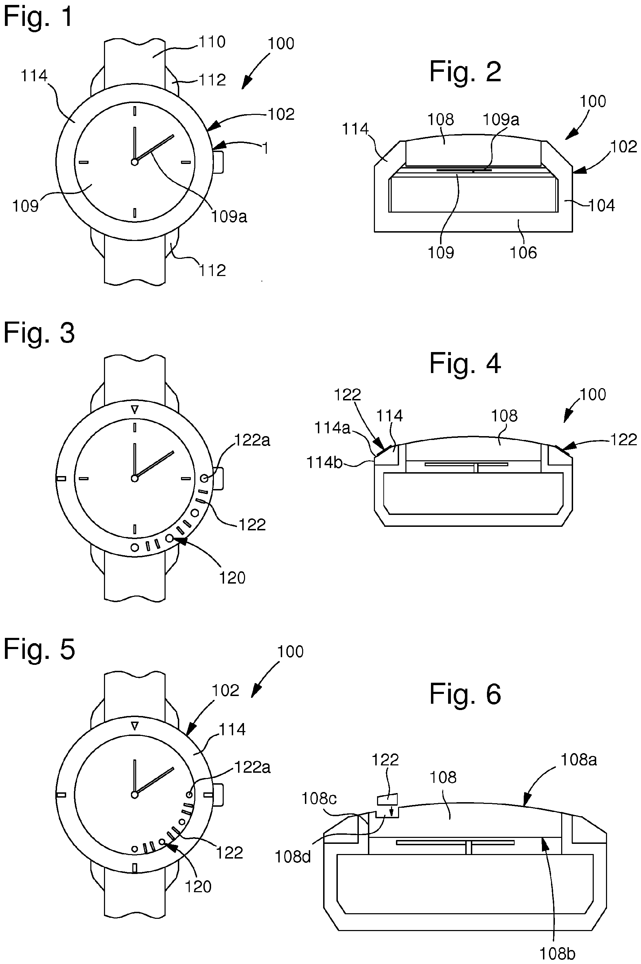

La pièce d'horlogerie 100, visible aux figures 1 et 2, est par exemple une montre bracelet et comprend un boitier 102. Ce boitier est formé par une carrure 104 fermée par un fond 106 et une glace 108. La pièce d'horlogerie peut comprendre un cadran 109 et des moyens d'affichage 109a. La pièce d'horlogerie comprend également un bracelet 110. Ce dernier est fixé à la carrure via deux paires de cornes 112. Le bracelet peut être constitué de deux brins, chaque brin étant fixé à une paire de cornes et relié à l'autre brin via un fermoir.

L'élément d'habillage 1 comprend une armature réalisée en un premier matériau. Ce premier matériau peut être par exemple un matériau métallique, céramique, composite ou plastique.

Sur cette armature, au moins un capteur d'altitude 120 est agencé. Ce capteur d'altitude 120 est utilisé afin de permette à l'utilisateur de visualiser à quel niveau il se trouve par rapport à une référence. En effet, il est envisageable que le capteur d'altitude puisse permettre la visualisation d'une altitude positive c'est-à-dire positive par rapport au niveau de la mer mais également d'une altitude négative c'est-à-dire sous le niveau de la mer.

Avantageusement selon l'invention, le capteur d'altitude comprend au moins une pastille piézochromique 122. Cette pastille piézochromique est agencée sur un support creux étanche à l'eau et à l'air dont la cavité est à une pression PRef connue ou est composée d'un corps creux étanche à l'eau et à l'air dont la cavité est à une pression PRef connue. La pastille est également composée d'un pigment piézochromique dispersé dans une matrice. Cette matrice est un liant servant de support pour le pigment. Cette configuration permet d'avoir le pigment piézochromique voyant une différence de pression entre la pression PRef connue et la pression extérieure ressentie.

Un tel pigment piézochromique présente à pression ambiante une première couleur et change de couleur pour présenter une seconde couleur lorsque la pression atteint une valeur spécifique au dit pigment. Or, comme la profondeur et l'altitude sont liées à la pression, une indication d'altitude supérieure ou inférieure au niveau de la mer est possible. Ainsi, la pression augmente avec la profondeur et diminue avec l'altitude.

Cette caractéristique permet d'indiquer visuellement le franchissement d'un seuil de pression.

Dans un mode de réalisation préféré, le capteur d'altitude permet la visualisation d'une échelle d'altitude. Pour cela, le capteur d'altitude comprend une pluralité de pastilles piézochromiques. Chaque pastille piézochromique comprend un pigment réagissant à une pression spécifique. Par conséquent, chaque pastille change de couleur lorsqu'une pression spécifique est atteinte. Pour avoir une échelle d'altitude, il sera fait en sorte que les pressions spécifiques des pastilles soient croissantes ou décroissantes. Ainsi, lorsque l'utilisateur portant l'objet portable prend de l'altitude, les pastilles changent de couleur au fur et à mesure permettant une indication visuelle. Ces pastilles 122 peuvent être collées les unes aux autres ou espacées.

Dans une variante préférée, les différentes pastilles composant l'échelle d'altitude présentent toutes une première couleur, c'est à dire une couleur au repos identique. On comprend par là qu'à une altitude au niveau de la mer, toutes les pastilles ont la même couleur.

Dans une autre variante préférée, les différentes pastilles composant l'échelle d'altitude présentent toute une seconde couleur, c'est à dire une couleur, lorsque leur seuil spécifique est atteint, identique. On comprend par là qu'à l'altitude maximale mesurable, toutes les pastilles auront la même couleur.

Dans une autre variante préférée, les différentes pastilles composant l'échelle d'altitude présentent toutes une première couleur identique mais sont réalisées pour qu'elles n'aient pas toutes une seconde couleur identique afin de permettre un dégradé. Plus précisément, les pastilles sont conçues pour que, lorsqu'elles forment une échelle d'altitude, les pastilles changeant de couleur les premières ont une seconde couleur plus claire que les pastilles changeant de couleur en dernier. Par exemple, les premières pastilles deviennent jaunes et les dernières deviennent rouges. Cela permet une indication double : non seulement l'utilisateur sait que la profondeur ou l'altitude augmente car le nombre de pastilles changeant de couleur augmente mais il sait également qu'il se rapproche d'une altitude ou profondeur maximale car la couleur varie et devient de plus en plus foncée.

On comprendra donc ici que le pigment piézochromique est du type réversible. Cela signifie que lorsque le pigment atteint ou dépasse un seuil de pression spécifique, il change de couleur passant d'une première couleur à une seconde couleur. Mais cela signifie aussi que lorsque la pression repasse en dessous du seuil spécifique, le pigment passe de la seconde couleur vers la première couleur.

Dans un exemple de réalisation dudit pigment piézochromique, ce dernier est utilisé en dispersion dans un liant entre 0.01 et 5% en masse. Le pigment inclut de manière non limitative un :
- Triaryle imidazole dimeres de Bis-2,4,5- triaryle imidazoles ayant un ou plusieurs groupes substituant sélectionnés des groupes aryle tel que phenyle, p-tolyel, p- chlorophenyle ou p-anisyle 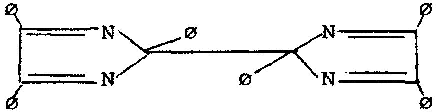 Les composants préférés sont: 2, 2', 4, 4' 5, 5' -hexaphenyle bisimidazole; 2, 2', 4, 4' 5, 5' -hexa-p-tolyle bisimidazole ; le 2, 2' , 4, 4' 5, 5' -hexa-p-chlorophenyle bisimidazole; le 2, 2' -di-p-chlorophenyle-4, 4', 5, 5' tetraphenyle bisimidazole; le 2, 2' -di-p-Anisyle-4, 4', ! 5' -tetraphenyle bisimidazole; et le 2, 2' -di-p-tolyl-4, 4',. 5'-tetraphenyle bisimidazole.
- Bistetraaryle pyrrole Bistetra phenyl pyrrole 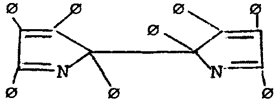
- Bianthrones: Δ 10, 10' -bianthrone; 2, 4, 2', 4' -tetramethyl bianthrone Xanthylidene anthrone. 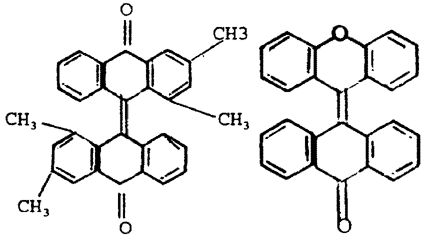
- Dixanthylene.
- Helianthrone.
- Mesonaphthobianthrone.

La matrice utilisée pour la dispersion du pigment peut être de différentes sortes.

Une première catégorie de matrice comprend les encres, laques et peintures. Cette matrice consiste en un liant polymérique mélangé avec au moins un solvant, un plastifiant et un dispersant. Une telle matrice peut être un système polyuréthane, acrylique, polysilane et dérivés, silicone, époxy, polyamide, cellulosique ou tout autre système polymérique permettant de combiner esthétique et résistance propre aux composants horlogers.

Une seconde catégorie de matrice comprend les granulés thermoplastiques. Cette matrice consiste en une résine mélangée avec au moins un dispersant et un plastifiant.

Une troisième catégorie de matrice comprend le mélange caoutchouc. Cette matrice consiste en un élastomère mélangé avec au moins des charges, un dispersant et un système de vulcanisation.

Une quatrième catégorie de matrice comprend les mélanges thermodurcissables. Ces mélanges consistent en une résine liquide mélangée avec au moins un dispersant.

Les seconde, troisième et quatrième catégories permettent alors de réaliser des pastilles piézochromiques sous forme d'insert par moulage, pastilles qui peuvent être assemblées à des composants par la suite (les techniques de surmoulage, collage, vissage sont utilisables). Ces catégories permettent aussi le moulage de composants plastiques intégrant la pastille piézochromique par injection multi-matière piézochromique.

Ces catégories permettent d'utiliser les pastilles comme revêtement afin de former une pastille piézochromique ou un décor, comme par exemple un ensemble de pastilles piézochromiques réalisées par impression par sérigraphie d'une échelle altimétrique sur l'armature, celle-ci étant creuse et étanche pour avoir une pression PRef connue. Cette configuration permet d'avoir le pigment piézochromique voyant une différence de pression entre la pression PRef connue dans l'armature et la pression extérieure ressentie.

Elles permettent également de réaliser une pastille sous forme d'insert c'est-à-dire un corps creux étanche à l'eau et à l'air dont la cavité est à une pression PRef connue. Ce corps peut être réalisé dans un matériau incluant les pigments piézochromiques ou être revêtu d'une encre comprenant lesdits pigments. Ce revêtement peut être une laque ou un dépôt en couches minces. Cette configuration permet d'avoir le pigment piézochromique voyant une différence de pression entre la pression PRef connue dans le corps creux et la pression extérieure ressentie.

Le matériau utilisé peut être un matériau organique ou métallique ou inorganique, transparent ou opaque, comme par exemple le plastique ou une résine ou un verre.

Dans un exemple, la pastille est réalisé en Polyméthacrylate de méthyle appelé aussi PMMA. Cette pastille est formée d'une double coque assemblée et étanchéifiée par soudure ultrason. Cette double coque est ensuite revêtue par sprayage d'un dépôt de 50µm d'une laque thermo chromique Polyurethane contenant une dispersion de pigments piézochromiques. Le pigment piézochromique représente 2.5% en masse du mélange.

Dans un premier mode d'exécution, l'élément d'habillage est une lunette 114 comme visible aux figures 3 et 4. Cette lunette 114 peut être une lunette tournante ou une lunette fixe. Dans le cas d'une lunette fixe, cette lunette peut être un anneau fixé à la carrure de sorte à ne pas pouvoir tourner ou être directement intégrée à la carrure 104 et former ainsi une carrure-lunette.

Une telle lunette 114 présente une paroi supérieure 114a qui est la face visible par l'utilisateur et une paroi verticale 114b permettant à l'utilisateur de faire tourner la lunette dans le cas d'une lunette tournante.

Dans ce mode d'exécution, les pastilles 122 de pigment piézochromique sont agencées sur la paroi supérieure 114a faisant office de face visible.

Dans le cas où les pastilles 122 se présentent sous la forme d'une encre ou peinture, ces pastilles sont sérigraphiées sur ladite paroi supérieure, la lunette étant creuse. Une échelle peut également être sérigraphiée pour associer une indication chiffrée à ces pastilles piézochromiques. Bien entendu, il peut être prévu que les valeurs importantes telle que 0, 100m, 200m soient visualisées par des pastilles différentes 122a.

Dans le cas où les pastilles se présentent sous la forme d'insert, la paroi supérieure 114a de la lunette 114 comprend des creusures (non représentée). Le nombre de creusures est identique au nombre d'inserts. Les inserts peuvent alors être placés et fixés dans les creusures par collage par exemple. Toutefois, il reste possible de directement surmouler les inserts dans les creusures. On obtient alors une lunette ayant un aspect bi-matière lorsqu'une lunette en métal présente des inserts en caoutchouc par exemple.

Bien entendu, il est possible d'avoir plusieurs capteurs d'altitude 120 sur la lunette. Par exemple, un premier capteur s'étendrait sur la lunette selon un arc de cercle allant de la position 9H du tour d'heure à la position 3H du tour d'heure. Un second capteur s'étendrait sur la lunette selon un arc de cercle allant de la position 3H du tour d'heure à la position 9H du tour d'heure. La première couleur du premier capteur peut être choisie identique ou différente de la première couleur du second capteur.

Dans le cas où elles sont identiques, il est avantageux d'avoir 12 pastilles 120, une par heure et il est avantageux d'avoir des secondes couleurs différentes. Par exemple, la première couleur du premier et du second capteur sera le blanc ; le premier capteur permettant la mesure de la profondeur aura une seconde couleur qui sera le bleu alors que le second capteur permettant la mesure de l'altitude aura une seconde couleur qui sera le rouge.

Dans un second mode d'exécution visible aux figures 5 et 6, l'élément d'habillage est la glace 108 de l'objet portable. Une telle glace 108 est fixée à la carrure 104 et présente une face supérieure 108a, une face inférieure 108b et une tranche latérale 108c pour la fixation.

Dans ce second mode d'exécution, les pastilles 122 piézochromiques sont agencées sur la face supérieure 108a de la glace.

Dans le cas d'une encre ou d'une peinture, Les pastilles sont sérigraphiées sur ladite face supérieure 108a. Une échelle peut également être sérigraphiée pour associer une indication chiffrée à ces pastilles piézochromiques. Cette échelle peut être sérigraphiée sur la lunette.

Dans une variante, la glace présente des creusures 108d de très faibles épaisseurs. Ces creusures permettent d'y placer l'encre pièzo-chromique tout en s'assurant d'une surface de glace 108 parfaitement lisse, les risques de chocs écaillant ladite encre sont donc diminués.

Dans le cas où les pastilles 122 se présentent sous la forme d'insert, la face supérieure 108a de la glace 108 comprend des creusures 108d. Le nombre de creusures est identique au nombre d'inserts. Les inserts peuvent alors être placés et fixés dans les creusures par collage par exemple. Toutefois, il reste possible de directement surmouler les inserts dans les creusures. On obtient alors une glace ayant un aspect bi-matière.

Il est possible, pour ces deux cas de figure, que les pastilles piézochromiques 122 soient agencées sur la face supérieure de la glace mais que les indications chiffrées de profondeur ou d'altitude soient placées sur le cadran ou sous la glace.

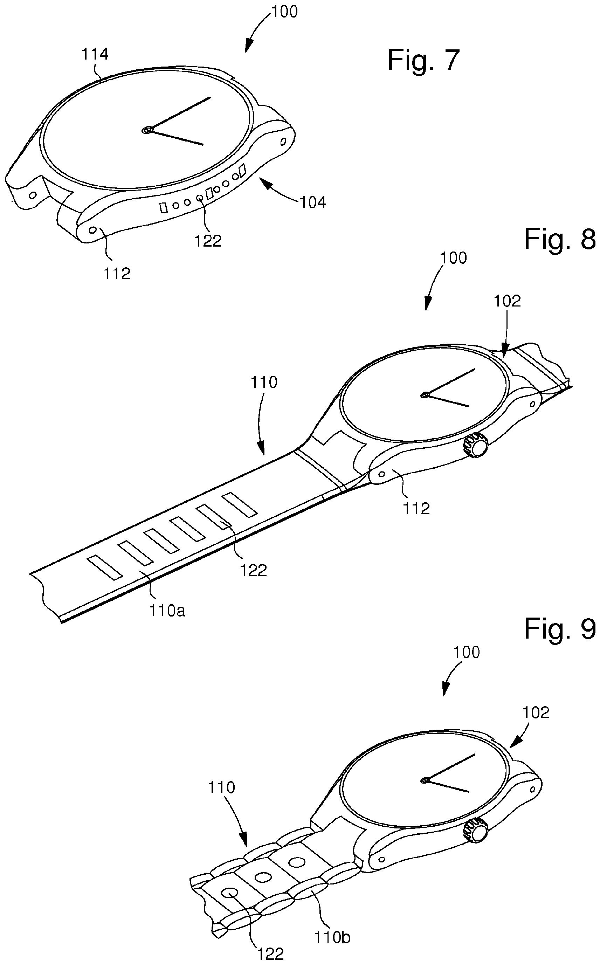

Dans un troisième mode d'exécution visible à la figure 7, l'élément d'habillage est la carrure 104 de l'objet portable.

Comme pour le premier et le second mode d'exécution, les pastilles piézochromiques 122 sous forme d'encre ou d'inserts sont agencées directement sur la carrure ou dans des creusures sur ladite carrure. Les indications chiffrées de profondeur peuvent être sérigraphiées sur la carrure.

Dans un quatrième mode d'exécution, l'élément d'habillage est le bracelet 110 de la montre. En effet, la pièce d'horlogerie est munie d'un bracelet fixé à la carrure via deux paires de cornes.

Dans un premier cas visible à la figure 8, le bracelet 110 est constitué de deux brins 110a de bracelet, chaque brin étant fixé à une paire de cornes 112 et relié à l'autre brin via un fermoir 111. Préférentiellement, les brins 110a de bracelet sont réalisés en caoutchouc ou plastique.

Plusieurs solutions sont possibles pour l'agencement des pastilles piézochromiques 122.

Une première solution consiste à sérigraphier le bracelet avec une encre piézochromique ou à revêtir certaines zones avec une peinture piézochromique, cette opération étant réalisable sur un bracelet en cuir, plastique, métal ou céramique.

Une seconde solution consiste à utiliser des pastilles comme insert et à placer et fixer ces inserts dans des creusures faites dans le brin de bracelet.

Une troisième solution consiste à sérigraphier un support flexible avec l'encre piézochromique. Ce support flexible étant ensuite inséré dans le brin de bracelet de sorte que les pastilles soient visibles.

Dans un second cas visible à la figure 9, le bracelet est en métal et est alors constitué d'une pluralité de maillons 110b attachés les uns aux autres par l'intermédiaire de goupilles. Cela permet d'avoir des maillons 110b qui peuvent pivoter les uns par rapport aux autres.

Ce brin de bracelet est également constitué d'un fermoir. Ce fermoir se présente ici sous la forme d'une boucle déployante 111.

Les pastilles piézochromiques 122 sous forme d'encre ou d'inserts sont alors agencées au niveau des maillons 110b dudit bracelet, directement sur le bracelet ou dans des creusures de celui-ci.

Préférentiellement, chaque maillon 110b porte une pastille piézochromique.

Encore plus préférentiellement, les pastilles piézochromiques 122 sont agencées sur les maillons 100c situés entre la paire de cornes à 6H et la boucle déployante. Effectivement, lorsqu'une pièce d'horlogerie se trouve au poignet de l'utilisateur, les maillons 110b situés entre la paire de cornes située à 6 H et la boucle déployante 111 sont les plus accessibles par l'utilisateur. Ce dernier a juste à légèrement tourner son poignet pour les voir. Ils sont encore plus visibles lorsque l'utilisateur a ses bras posés sur une table ou un bureau. Cet agencement permet de ne pas surcharger le visuel du cadran en ayant des pastilles sur la glace ou la lunette tout en offrant une bonne visibilité.

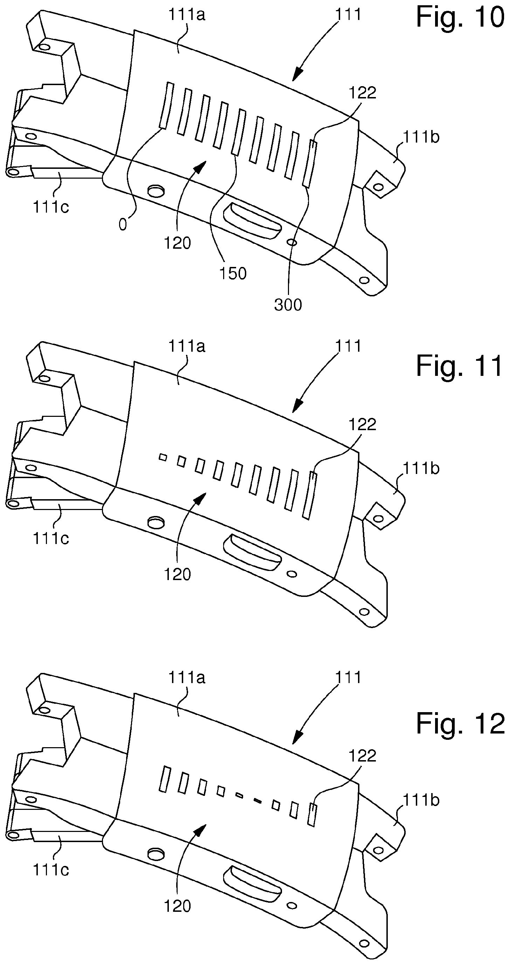

Dans un quatrième mode d'exécution visible aux figures 10 à 12, l'élément d'habillage est le fermoir 111 c'est-à-dire la boucle déployante du bracelet. Une telle boucle déployante est composée généralement de trois parties 111a, 111b, 111c comme des longerons articulés les uns par rapport aux autres. Deux de ces parties sont fixées à un maillon. Ces parties composant la boucle déployante 111 sont alors conçues pour s'articuler de sorte qu'elles puissent s'empiler, ces trois parties 111a, 111b, 111c n'en faisant alors qu'une. Cette configuration permet d'agrandir la longueur du bracelet momentanément pour la fixation au poignet de l'utilisateur.

Pour certains modèles de boucle déployante, une des parties fait office de pièce principale 111a car c'est cette partie qui accueille les deux autres parties 111b, 111c, cette partie 111a dite principale est la partie visible de l'extérieur. De l'extérieur, l'utilisateur voit donc une partie ayant la forme d'une plaque de métal sur laquelle des indications comme le nom de la marque peuvent être gravées.

Avantageusement, la présente invention utilise cette surface pour l'agencement du capteur d'altitude. Les pastilles piézochromiques 122 sont donc disposées sur cette surface de la partie centrale 111a de la boucle déployante comme visible à la figure 10.

Les pastilles piézochromiques 122 peuvent être alignées et associées à une échelle d'indications chiffrées. Il est toutefois possible que les pastilles 122 soient configurées pour avoir des tailles différentes selon l'altitude comme visible à la figure 11. Par exemple, les pastilles piézochromiques 122 peuvent se présenter sous la forme de barrettes de plus en plus grandes à mesure que la profondeur augmente ou à mesure que l'altitude augmente. De ce fait, l'utilisateur est capable, sans indication chiffrée, d'avoir une information fiable.

Dans une variante visible à la figure 12, il sera possible d'avoir une échelle étendue. Cette échelle étendue présente un trait central à partir duquel les barrettes formant les pastilles piézochromiques 122 s'étendent. Ces barrettes s'étendent de part et d'autre du trait de sorte que les barrettes utilisées pour la mesure de la profondeur s'étendent vers le bas alors que les barrettes pour mesurer l'altitude s'étendent vers le faut.

Dans une variante de l'invention, le pigment piézochromique est couplé à un pigment fluorescent afin d'émettre une couleur plus intense en présence de rayons ultraviolets ou à un pigment phosphorescent afin d'absorber l'énergie du spectre visible et d'émettre une couleur intense en l'absence de lumière.

Cette caractéristique permet à la pastille piézochromique 122 d'être luminescente et visible par l'utilisateur en toutes circonstances. Par exemple, cette faculté à réagir aux rayonnements ultraviolets ou visibles permet d'avoir les pastilles qui sont lisibles en cas de plongée en profondeur, dans un milieu obscur.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

On peut également prévoir que la couronne de la pièce d'horlogerie présente au moins une pastille piézochromique. Cette pastille peut être configurée de sorte que la pression à laquelle elle change de couleur corresponde à l'altitude ou la profondeur maximale de ladite pièce d'horlogerie.

## Revendications

1. Elément d'habillage (1) d'une pièce d'horlogerie comprenant une armature réalisée en un premier matériau, ledit élément d'habillage comprenant en outre au moins un capteur de pression (120), **caractérisé en ce que** ledit capteur de pression est formé d'au moins une pastille (122), ladite pastille (122) étant composée d'un liant et d'un pigment piézochromique, ledit pigment piézochromique étant choisi pour réagir à une pression spécifique de sorte que ledit pigment passe d'une première couleur à une seconde couleur lorsque ladite pression spécifique est atteinte.

2. Elément d'habillage selon la revendication 1, **caractérisé en ce que** ledit capteur de pression (120) est formé d'une pluralité de pastilles (122), chaque pastille réagissant à une pression spécifique qui lui est propre.

3. Elément d'habillage selon la revendication 2, **caractérisé en ce que** lesdites pastilles (122) ont toutes la même première couleur.

4. Elément d'habillage selon la revendication 3, **caractérisé en ce que** lesdites pastilles (122) ont toutes la même seconde couleur.

5. Elément d'habillage selon la revendication 3, **caractérisé en ce que** lesdites pastilles (122) sont conçues de sorte que leur seconde couleur permette un dégradé lorsqu'elles sont toutes passées de la première couleur à la seconde couleur.

6. Elément d'habillage selon l'une des revendications précédentes, **caractérisé en ce que** ledit capteur de pression (120) permet la mesure d'une altitude positive par rapport au niveau de la mer.

7. Elément d'habillage selon l'une des revendications précédentes, **caractérisé en ce que** ledit capteur de pression (120) permet la mesure d'une altitude négative par rapport au niveau de la mer.

8. Elément d'habillage selon l'une des revendications 1 à 5, **caractérisé en ce que** ledit capteur de pression (120) permet la mesure d'une profondeur sous l'eau.

9. Elément d'habillage selon l'une des revendications précédentes, **caractérisé en ce que** la pastille (122) se présente sous la forme d'une encre ou peinture ou laque déposée sur l'armature, ladite armature étant creuse une pression PRef connue.

10. Elément d'habillage selon l'une des revendications 1 à 8, **caractérisé en ce que** la pastille se présente sous la forme d'un insert formé d'un corps creux étanche à l'eau et à l'air, ledit corps creux étant revêtu par ledit pigment piézochromique.

11. Elément d'habillage selon l'une des revendications 1 à 8, **caractérisé en ce que** la pastille (122) se présente sous la forme d'un insert formé d'un corps creux étanche à l'eau et à l'air, ledit pigment piézochromique étant dispersé dans le matériau formant ledit corps.

12. Elément d'habillage selon l'une des revendications précédentes, **caractérisé en ce que** l'armature comprend au moins une creusure dans laquelle la pastille (122) est agencée.

13. Elément d'habillage selon l'une des revendications précédentes, **caractérisé en ce que** l'armature est une lunette (114).

14. Elément d'habillage selon l'une des revendications précédentes, **caractérisé en ce que** l'armature est une glace (108).

15. Elément d'habillage selon l'une des revendications précédentes, **caractérisé en ce que** l'armature est une carrure (104) de boite (102) de montre.

16. Elément d'habillage selon l'une des revendications précédentes, **caractérisé en ce que** l'armature est un bracelet (110).

17. Elément d'habillage selon la revendication 16, **caractérisé en ce que** le bracelet comprend deux brins (110a), ledit capteur de pression (120) étant agencé sur au moins un des deux brins.

18. Elément d'habillage selon la revendication 16, **caractérisé en ce que** le bracelet comprend une pluralité de maillons (110b) articulés entre eux, ledit capteur de pression (120) étant agencé sur au moins un maillon.

19. Elément d'habillage selon la revendication 16, **caractérisé en ce que** ledit bracelet est fermé par un fermoir (111) à boucle déployante, ledit capteur de pression étant agencé sur ledit fermoir.

20. Elément d'habillage selon l'une des revendications précédentes, **caractérisé en ce que** l'armature est une couronne.

21. Elément d'habillage selon l'une des revendications précédentes, **caractérisé en ce que** ledit pigment piezochromique est couplé à un pigment luminescent pour émettre une couleur plus intense.

## Patentansprüche

1. Verkleidungselement (1) eines Zeitmessgeräts, umfassend eine Ummantelung, die aus einem ersten Material hergestellt ist, wobei das Verkleidungselement ferner mindestens einen Drucksensor (120) umfasst, **dadurch gekennzeichnet, dass** der Drucksensor aus mindestens einem Plättchen (122) gebildet ist, wobei das Plättchen (122) aus einem Bindemittel und einem piezochromen Pigment zusammengesetzt ist, wobei das piezochrome Pigment gewählt ist, um auf einen bestimmten Druck zu reagieren, derart, dass das Pigment von einer ersten Farbe zu einer zweiten Farbe übergeht, wenn der bestimmte Druck erreicht ist.

2. Verkleidungselement nach Anspruch 1, **dadurch gekennzeichnet, dass** der Drucksensor (120) aus mehreren Plättchen (122) gebildet ist, wobei jedes Plättchen auf einen bestimmten, ihm eigenen Druck reagiert.

3. Verkleidungselement nach Anspruch 2, **dadurch gekennzeichnet, dass** alle Plättchen (122) die gleiche erste Farbe haben.

4. Verkleidungselement nach Anspruch 3, **dadurch gekennzeichnet, dass** alle Plättchen (122) die gleiche zweite Farbe haben.

5. Verkleidungselement nach Anspruch 3, **dadurch gekennzeichnet, dass** die Plättchen (122) in einer Weise gestaltet sind, dass ihre zweite Farbe eine Abschattierung ermöglicht, wenn sie alle von der ersten Farbe zu der zweiten Farbe übergegangen sind.

6. Verkleidungselement nach einem der vorhergehenden Ansprüche, **dadurch gekennzeichnet, dass** der Drucksensor (120) ermöglicht, eine positive Höhe in Bezug auf den Meeresspiegel zu messen.

7. Verkleidungselement nach einem der vorhergehenden Ansprüche, **dadurch gekennzeichnet, dass** der Drucksensor (120) ermöglicht, eine negative Höhe in Bezug auf den Meeresspiegel zu messen.

8. Verkleidungselement nach einem der Ansprüche 1 bis 5, **dadurch gekennzeichnet, dass** der Drucksensor (120) ermöglicht, eine Wassertiefe zu messen.

9. Verkleidungselement nach einem der vorhergehenden Ansprüche, **dadurch gekennzeichnet, dass** das Plättchen (122) in Form einer auf die Ummantelung aufgebrachten Tinte oder einer Farbe oder eines Lacks vorliegt, wobei die Ummantelung hohl ist mit einem bekannten Druck PRef.

10. Verkleidungselement nach einem der Ansprüche 1 bis 8, **dadurch gekennzeichnet, dass** das Plättchen in Form eines Einsatzes ausgebildet ist, der aus einem wasserdichten und luftdichten Hohlkörper gebildet ist, wobei der Hohlkörper mit dem piezochromen Pigment beschichtet ist.

11. Verkleidungselement nach einem der Ansprüche 1 bis 8, **dadurch gekennzeichnet, dass** das Plättchen (122) in Form eines Einsatzes ausgebildet ist, der aus einem wasserdichten und luftdichten Hohlkörper gebildet ist, wobei das piezochrome Pigment in dem den Körper bildenden Material dispergiert ist.

12. Verkleidungselement nach einem der vorhergehenden Ansprüche, **dadurch gekennzeichnet, dass** die Ummantelung mindestens eine Höhlung aufweist, in der das Plättchen (122) angeordnet ist.

13. Verkleidungselement nach einem der vorhergehenden Ansprüche, **dadurch gekennzeichnet, dass** die Ummantelung eine Lünette (114) ist.

14. Verkleidungselement nach einem der vorhergehenden Ansprüche, **dadurch gekennzeichnet, dass** die Ummantelung ein Uhrenglas (108) ist.

15. Verkleidungselement nach einem der vorhergehenden Ansprüche, **dadurch gekennzeichnet, dass** die Ummantelung ein Mittelteil (104) eines Uhrengehäuses (102) ist.

16. Verkleidungselement nach einem der vorhergehenden Ansprüche, **dadurch gekennzeichnet, dass** die Ummantelung ein Armband (110) ist.

17. Verkleidungselement nach Anspruch 16, **dadurch gekennzeichnet, dass** das Armband zwei Stränge (110a) besitzt, wobei der Drucksensor (120) in mindestens einem der zwei Stränge angeordnet ist.

18. Verkleidungselement nach Anspruch 16, **dadurch gekennzeichnet, dass** das Armband eine Mehrzahl von aneinander angelenkten Gliedern (110b) umfasst, wobei der Drucksensor (120) an mindestens einem Glied angeordnet ist.

19. Verkleidungselement nach Anspruch 16, **dadurch gekennzeichnet, dass** das Armband durch eine Faltschließe (111) geschlossen wird, wobei der Drucksensor an der Schließe angeordnet ist.

20. Verkleidungselement nach einem der vorhergehenden Ansprüche, **dadurch gekennzeichnet, dass** die Ummantelung eine Krone ist.

21. Verkleidungselement nach einem der vorhergehenden Ansprüche, **dadurch gekennzeichnet, dass** das piezochrome Pigment mit einem lumineszenten Pigment gekoppelt ist, um eine intensivere Farbe auszustrahlen.

## Claims

1. External timepiece element (1) including a frame made of a first material, said external element further including at least one pressure sensor (120), **characterized in that** said pressure sensor is formed of at least one plate (122), said plate (122) being formed of a binder and of a piezochromic pigment, said piezochromic pigment being selected to react at a specific pressure, so that said pigment changes from a first colour to a second colour when said specific pressure is reached.

2. External element according to claim 1, **characterized in that** said pressure sensor (120) is formed of a plurality of plates (122), each plate reacting at a specific pressure that is peculiar thereto.

3. External element according to claim 2, **characterized in that** said plates (122) all have the same first colour.

4. External element according to claim 3, **characterized in that** said plates (122) all have the same second colour.

5. External element according to claim 3, **characterized in that** said plates (122) are devised such that the second colour can produce shading when the plates have all changed from the first colour to the second colour.

6. External element according to any of the preceding claims, **characterized in that** said pressure sensor (120) allows measurement of a positive altitude with respect to sea level.

7. External element according to any of the preceding claims, **characterized in that** said pressure sensor (120) allows measurement of a negative altitude with respect to sea level.

8. External element according to any of claims 1 to 5, **characterized in that** said pressure sensor (120) allows measurement of an underwater depth.

9. External element according to any of the preceding claims, **characterized in that** the plate (122) takes the form of an ink or paint or lacquer deposited on the frame, said frame being hollow with a known pressure (PRef).

10. External element according to any of claims 1 to 8, **characterized in that** the plate takes the form of an insert formed of a hollow body impermeable to water and air, said hollow body being coated with said piezochromic pigment.

11. External element according to any of claims 1 to 8, **characterized in that** the plate (122) takes the form of an insert formed of a hollow body impermeable to water and air, said piezochromic pigment being dispersed in the material forming said body.

12. External element according to any of the preceding claims, **characterized in that** the frame includes at least one hollow inside which the plate (122) is arranged.

13. External element according to any of the preceding claims, **characterized in that** the frame is a bezel (114).

14. External element according to any of the preceding claims, **characterized in that** the frame is a crystal (108).

15. External element according to any of the preceding claims, **characterized in that** the frame is a middle part (104) of a watch case (102).

16. External element according to any of the preceding claims, **characterized in that** the frame is a watchband (110).

17. External element according to claim 16, **characterized in that** the watchband includes two strands (110a), said pressure sensor (120) being arranged on at least one of the two strands.

18. External element according to claim 16, **characterized in that** the watchband includes a plurality of links (110a) hinged to each other, said pressure sensor (120) being arranged on at least one link.

19. External element according to claim 16, **characterized in that** said watchband is closed by a clasp (111) with a deployant buckle, said pressure sensor being arranged on said clasp.

20. External element according to any of the preceding claims, **characterized in that** the frame is a crown.

21. External element according to any of the preceding claims, **characterized in that** said piezochromic pigment is coupled with a luminescent pigment to emit a more intense colour.
